# EUROPEAN PATENT APPLICATION

(11) **EP 4 840 714 A1**
(43) Date of publication of application: **18.11.2026**
(21) Application number: 25757717.1
(22) Date of filing: 18.02.2025
(51) Int. Cl.: B60W 30/06

(54) **PARKING METHOD AND APPARATUS, AND VEHICLE**

(30) Priority: 20.02.2024 CN 202410194397
(71) Applicant: Yinwang Intelligent Technologies Co., Ltd., Shenzhen, Guangdong 518110 (CN)
(72) Inventor: LIANG, Guanqun, Shenzhen, Guangdong 518110 (CN); WANG, Xiaokang, Shenzhen, Guangdong 518110 (CN); ZHANG, Yu, Shenzhen, Guangdong 518110 (CN); TONG, Liuzhu, Shenzhen, Guangdong 518110 (CN); ZHANG, Lianghe, Shenzhen, Guangdong 518110 (CN)
(74) Representative: Gill Jennings & Every LLP
(86) International application number: PCT/CN2025/077860
(87) International publication number: WO 2025/176125

(57) **Abstract**

A parking method and apparatus, and a vehicle are provided. The method includes: obtaining a location at which the vehicle is located and information about a target parking space; planning a parking path based on the location and the information about the target parking space, where the parking path includes a path for traveling in a counter-phase steering mode and a path for traveling in an in-phase steering mode, a direction of a front-wheel steering angle of the vehicle is opposite to a direction of a rear-wheel steering angle of the vehicle in the counter-phase steering mode, and the direction of the front-wheel steering angle of the vehicle is the same as the direction of the rear-wheel steering angle of the vehicle in the in-phase steering mode; and controlling, based on the first parking path, the vehicle to park in the target parking space from the first location.

## Description

This application claims priority to Chinese Patent Application No. 202410194397.6, filed with the China National Intellectual Property Administration on February 20, 2024 and entitled "PARKING METHOD AND APPARATUS, AND VEHICLE", which is incorporated herein by reference in its entirety.

### TECHNICAL FIELD

This application relates to the field of intelligent driving, and more specifically, to a parking method and apparatus, and a vehicle.

### BACKGROUND

Automatic parking (auto parking, AP) refers to an automated process of maneuvering a vehicle into a parking space. To be specific, an autonomous driving system can semiautomatically or automatically assist a user in parking the vehicle in the parking space. The automatic parking may include automatic parking assist (auto parking assist, APA), remote parking assist (remote parking assist, RPA), automatic valet parking (auto valet parking, AVP), and the like.

For a vehicle with front-wheel steering, a turning radius of the vehicle is large due to a limited front-wheel steering angle in a parking process. As a result, parking efficiency of the vehicle is low, affecting parking experience of the user.

### SUMMARY

This application provides a parking method and apparatus, and a vehicle, to enhance parking efficiency of the vehicle, thereby improving parking experience of a user.

According to a first aspect, a parking method is provided. The method includes: obtaining a first location at which a vehicle is located and information about a target parking space; planning a first parking path based on the first location and the information about the target parking space, where the first parking path includes a first parking sub-path and a second parking sub-path, the first parking sub-path is a path for traveling in a counter-phase steering mode, the second parking sub-path is a path for traveling in an in-phase steering mode, a direction of a front-wheel steering angle of the vehicle is opposite to a direction of a rear-wheel steering angle of the vehicle in the counter-phase steering mode, and the direction of the front-wheel steering angle of the vehicle is the same as the direction of the rear-wheel steering angle of the vehicle in the in-phase steering mode; and controlling, based on the first parking path, the vehicle to park in the target parking space from the first location.

Based on the foregoing technical solution, during parking path planning, the vehicle may automatically plan a parking trajectory including a parking sub-trajectory in the in-phase steering mode and a parking sub-trajectory in the counter-phase steering mode based on a current location at which the vehicle is located and the information about the target parking space. A vehicle with a four-wheel steering capability can implement active steering of a front wheel and a rear wheel, and can implement more motion manners compared with a vehicle with two-front-wheel steering. For example, when a steering direction of the rear wheel is opposite to a steering direction of the front wheel, a turning radius can be reduced. For another example, when the steering direction of the rear wheel is the same as the steering direction of the front wheel, oblique motion may be performed. The vehicle with four-wheel steering is used in a parking scenario, so that more efficient parking can be implemented in the foregoing motion manner. In this way, a quantity of gear shifts of the vehicle in a process of parking in the target parking space can be reduced, to enhance parking efficiency of the vehicle, thereby improving parking experience of the user.

This application may be applied to a scenario in which the vehicle parks in a horizontal parking space, a vertical parking space, or an angled parking space, and is also applicable to a scenario in which the vehicle pulls out of a horizontal parking space, a vertical parking space, or an angled parking space.

In some possible implementations, the horizontal parking space, the vertical parking space, and the angled parking space may be narrow parking spaces.

In some possible implementations, before planning the first parking path, the method further includes: obtaining a second location of the vehicle; planning a fifth parking path through front-wheel steering based on the second location and the information about the target parking space, where the fifth parking path includes the first location; and when the vehicle travels to the first location along the fifth parking path, determining that the vehicle needs to re-plan a parking path.

Based on the foregoing technical solution, when the vehicle is stuck during parking in the target parking space through front-wheel steering, the vehicle may switch to parking in the target parking space through four-wheel steering. In this way, a process in which the user needs to manually drive the vehicle to park in the target parking space after the vehicle is stuck can be avoided. By utilizing rich motion modes of four-wheel steering, a parking path that can be used to park in the target parking space can be re-planned after the vehicle is stuck.

In some possible implementations, determining that the vehicle needs to re-plan the parking path includes: when it is detected that a collision risk between the vehicle and an obstacle is greater than or equal to a preset collision risk, determining that the vehicle needs to re-plan a parking path.

With reference to the first aspect, in some implementations of the first aspect, the first parking sub-path and the second parking sub-path are parking paths of the vehicle in a first gear.

Based on the foregoing technical solution, parking sub-paths in different steering modes may be planned in a traveling process in which the vehicle is in a gear. Different steering modes are switched in a same gear, so that the quantity of gear shifts of the vehicle in the process of parking in the target parking space can be reduced, to enhance parking efficiency of the vehicle, thereby improving parking experience of the user.

In some possible implementations, the first gear may be a reverse gear. Controlling, based on the first parking path, the vehicle to park in the target parking space from the first location includes: controlling, in a process in which the vehicle parks in the target parking space along the first parking sub-path, the vehicle to switch from the first parking sub-path to the second parking sub-path when a distance between the vehicle and an obstacle in a parking space adjacent to the target parking space is less than or equal to a preset distance. In this way, the vehicle can park in the middle of the target parking space without frequently adjusting gears. The vehicle can park in the middle of the target parking space by switching from the counter-phase steering mode to the in-phase steering mode in the reverse gear. This helps reduce the quantity of gear shifts in the parking process, thereby improving parking experience of the user.

With reference to the first aspect, in some implementations of the first aspect, the first parking path includes a plurality of expanded nodes, the plurality of expanded nodes include a first expanded node, and planning the first parking path based on the first location and the information about the target parking space includes: determining the plurality of to-be-expanded nodes based on information about a wheel steering angle, where the information about the wheel steering angle includes information about a wheel steering angle in the counter-phase steering mode and information about a wheel steering angle in the in-phase steering mode; and determining the first expanded node from the plurality of to-be-expanded nodes based on a cost from the first location to each to-be-expanded node in the plurality of to-be-expanded nodes and a heuristic value from the to-be-expanded node to the target parking space.

The steering wheel provides only one input, but steering angles of the front wheel and the rear wheel provide two outputs. Therefore, the conventional vehicle with four-wheel steering needs to lock the front-wheel steering angle and the rear-wheel steering angle in a fixed ratio. In this way, not all potentials of the in-phase steering mode and the counter-phase steering mode are realized, posing low parking efficiency.

Based on the foregoing technical solution, different wheel steering angle combinations are preset in advance, and a search algorithm is applied to the vehicle with four-wheel steering. In this way, the vehicle may automatically select an expanded node in different steering modes by using the search algorithm, to automatically generate the expanded node in the different steering modes without a process of manually selecting a steering mode. This helps improve parking experience of the user.

In some possible implementations, the method further includes: obtaining the information about the wheel steering angle based on environment information of the vehicle.

In some possible implementations, obtaining the information about the wheel steering angle based on the environment information of the vehicle includes: obtaining the information about the wheel steering angle based on a width of a lane in which the vehicle is located.

For example, the information about the wheel steering angle includes a plurality of combinations of the front-wheel steering angle and the rear-wheel steering angle. When the width of the lane in which the vehicle is located is greater than or equal to 5.3 meters, the front-wheel steering angle may be selected from [-40°, 40°], and the rear-wheel steering angle may be selected from [-5°, 5°].

For example, when the width of the lane in which the vehicle is located is less than 5.3 meters, the front-wheel steering angle may be selected from [-40°, 40°], and the rear-wheel steering angle may be selected from [-10°, 10°].

Based on the foregoing technical solution, when the widths of the lanes in which the vehicle is located are different, the front-wheel steering angle and the rear-wheel steering angle may be selected from different wheel steering angle ranges. For example, when the lane is wide, the rear-wheel steering angle may be selected from a small rear-wheel steering angle range. In this way, efficiency of determining the expanded node by the vehicle can be higher without increasing the quantity of gear shifts of the vehicle, to help enhance parking efficiency of the user.

In some possible implementations, obtaining the information about the wheel steering angle based on the environment information of the vehicle includes: obtaining the information about the wheel steering angle based on a width of the target parking space.

With reference to the first aspect, in some implementations of the first aspect, determining the first expanded node from the plurality of to-be-expanded nodes based on the cost from the first location to each to-be-expanded node in the plurality of to-be-expanded nodes and the heuristic value from the to-be-expanded node to the target parking space includes: determining the first expanded node from the plurality of to-be-expanded nodes based on the cost from the first location to each to-be-expanded node in the plurality of to-be-expanded nodes, a yaw direction of the vehicle at the to-be-expanded node, and the heuristic value from the to-be-expanded node to the target parking space.

When the conventional vehicle with front-wheel steering plans a parking path, a tangent direction of an expansion node in the parking path is a heading of the vehicle, and the heading of the vehicle is consistent with the yaw direction of the vehicle. However, for the vehicle with four-wheel steering, the heading of the vehicle is different from the yaw direction of the vehicle. Introduction of the rear-wheel steering angle changes a non-holonomic constraint of the vehicle with front-wheel steering, introducing a new degree of freedom, namely, the yaw direction of the vehicle.

Based on the foregoing technical solution, when the parking path is planned, the yaw direction of the vehicle at each expansion node may be further considered, to determine whether the vehicle may collide with a surrounding obstacle. This helps improve safety of the vehicle in the parking process.

In some possible implementations, the cost from the first location to each to-be-expanded node includes an obstacle avoidance cost.

With reference to the first aspect, in some implementations of the first aspect, the cost from the first location to each to-be-expanded node includes a front-wheel steering cost, a rear-wheel steering cost, a mode switching cost, and a gear shifting cost; and determining the first expanded node from the plurality of to-be-expanded nodes based on the cost from the first location to each to-be-expanded node in the plurality of to-be-expanded nodes and the heuristic value from the to-be-expanded node to the target parking space includes: determining the first expanded node from the plurality of to-be-expanded nodes based on the front-wheel steering cost, the rear-wheel steering cost, the mode switching cost, the gear shifting cost, a first weight, a second weight, a third weight, a fourth weight, and the heuristic value from the to-be-expanded node to the target parking space, where the first weight is a weight corresponding to the front-wheel steering cost, the second weight is a weight corresponding to the rear-wheel steering cost, the third weight is a weight corresponding to the mode switching cost, the fourth weight is a weight corresponding to the gear shifting cost, the first weight is less than the second weight, the second weight is less than the third weight, and the third weight is less than the fourth weight.

Based on the foregoing technical solution, when node extension is performed by using the search algorithm, a front-wheel steering cost, a rear-wheel steering cost, a mode switching cost, and a gear shifting cost between a current node (for example, the first location) and a to-be-expanded node may be considered, and a corresponding weight is designed for each cost. In these costs, a weight of the gear shifting cost may be set to be the highest. In this way, it can be first ensured that a quantity of gear shifts corresponding to the first parking path obtained through planning is as small as possible. In addition, the mode switching cost is considered, to avoid frequent switching between different steering modes. This helps reduce control complexity of the vehicle, and makes a curvature of a parking path output by the vehicle smoother.

In some possible implementations, the mode switching cost is a switching cost between the in-phase steering mode and the counter-phase steering mode.

With reference to the first aspect, in some implementations of the first aspect, the method further includes: controlling a display apparatus to display steering information of the front wheel and steering information of the rear wheel in the process in which the vehicle parks in the target parking space along the first parking path.

Based on the foregoing technical solution, the vehicle may control a display to display the steering information of the front wheel and the steering information of the rear wheel on the parking path. This may enable the user to intuitively perceive wheel steering information of the vehicle in a four-wheel steering process, thereby improving parking experience of the user.

With reference to the first aspect, in some implementations of the first aspect, the method further includes: determining a curvature optimization constraint based on at least one of a kinematic model of the vehicle and information about an obstacle around the vehicle; and controlling, based on the first parking path, the vehicle to park in the target parking space from the first location includes: optimizing a curvature of the first parking path based on the curvature optimization constraint, to obtain a second parking path; and controlling, based on the second parking path, the vehicle to park in the target parking space from the first location.

Based on the foregoing technical solution, the curvature optimization constraint may be constructed based on the kinematic model of the vehicle and the information about the obstacle around the vehicle. The curvature of the first parking path may be optimized based on the curvature optimization constraint. This may make change of the curvature of the optimized second parking path smoother, to help reduce control complexity of the vehicle.

With reference to the first aspect, in some implementations of the first aspect, before obtaining the first location at which the vehicle is located and the information about the target parking space, the method further includes: obtaining a first instruction of the user, where the first instruction instructs to activate an automatic parking function.

With reference to the first aspect, in some implementations of the first aspect, the automatic parking function includes an APA function.

With reference to the first aspect, in some implementations of the first aspect, before planning the first parking path based on the first location and the information about the target parking space, the method further includes: pre-planning a third parking path and a fourth parking path, where the third parking path is a parking path obtained through front-wheel steering planning, and the fourth parking path is a parking path obtained through four-wheel steering planning; and determining that a quantity of gear shifts of the fourth parking path is less than a quantity of gear shifts of the third parking path, and/or determining that a difference between a length of the fourth parking path and a length of the third parking path is greater than or equal to a preset difference.

Based on the foregoing technical solution, the vehicle may pre-plan the third parking path and the fourth parking path before automatic parking. If the quantity of gear shifts of the fourth parking path obtained through pre-planning is relatively small or the parking distance is relatively short, the first parking path may be planned based on the first location and the information about the target parking space. In this way, the vehicle may perform automatic parking through four-wheel steering when determining that four-wheel steering can enhance parking efficiency compared with front-wheel steering.

In some possible implementations, when it is determined that the quantity of gear shifts of the fourth parking path is equal to the quantity of gear shifts of the third parking path, and/or it is determined that the difference between the length of the fourth parking path and the length of the third parking path is less than the preset difference, the vehicle may determine to use front-wheel steering to plan a parking trajectory.

In some possible implementations, pre-planning the third parking path and the fourth parking path includes: obtaining the third parking path and the fourth parking path through pre-planning based on a geometric method.

According to a second aspect, this application provides a parking apparatus. The apparatus includes: an obtaining unit, configured to obtain a first location at which a vehicle is located and information about a target parking space; a planning unit, configured to plan a first parking path based on the first location and the information about the target parking space, where the first parking path includes a first parking sub-path and a second parking sub-path, the first parking sub-path is a path for traveling in a counter-phase steering mode, the second parking sub-path is a path for traveling in an in-phase steering mode, a direction of a front-wheel steering angle of the vehicle is opposite to a direction of a rear-wheel steering angle of the vehicle in the counter-phase steering mode, and the direction of the front-wheel steering angle of the vehicle is the same as the direction of the rear-wheel steering angle of the vehicle in the in-phase steering mode; and a control unit, configured to control, based on the first parking path, the vehicle to park in the target parking space from the first location.

With reference to the second aspect, in some implementations of the second aspect, the first parking sub-path and the second parking sub-path are parking paths of the vehicle in a first gear.

With reference to the second aspect, in some implementations of the second aspect, the first parking path includes a plurality of expanded nodes, the plurality of expanded nodes include a first expanded node, and the planning unit is specifically configured to: determine the plurality of to-be-expanded nodes based on information about a wheel steering angle, where the information about the wheel steering angle includes information about a wheel steering angle in the counter-phase steering mode and information about a wheel steering angle in the in-phase steering mode; and determine the first expanded node from the plurality of to-be-expanded nodes based on a cost from the first location to each to-be-expanded node in the plurality of to-be-expanded nodes and a heuristic value from the to-be-expanded node to the target parking space.

With reference to the second aspect, in some implementations of the second aspect, the planning unit is specifically configured to: determine the first expanded node from the plurality of to-be-expanded nodes based on the cost from the first location to each to-be-expanded node in the plurality of to-be-expanded nodes, a yaw direction of the vehicle at the to-be-expanded node, and the heuristic value from the to-be-expanded node to the target parking space.

With reference to the second aspect, in some implementations of the second aspect, the cost from the first location to each to-be-expanded node includes a front-wheel steering cost, a rear-wheel steering cost, a mode switching cost, and a gear shifting cost; and the planning unit is specifically configured to: determine the first expanded node from the plurality of to-be-expanded nodes based on the front-wheel steering cost, the rear-wheel steering cost, the mode switching cost, the gear shifting cost, a first weight, a second weight, a third weight, a fourth weight, and the heuristic value from the to-be-expanded node to the target parking space, where the first weight is a weight corresponding to the front-wheel steering cost, the second weight is a weight corresponding to the rear-wheel steering cost, the third weight is a weight corresponding to the mode switching cost, the fourth weight is a weight corresponding to the gear shifting cost, the first weight is less than the second weight, the second weight is less than the third weight, and the third weight is less than the fourth weight.

With reference to the second aspect, in some implementations of the second aspect, the control unit is further configured to control a display apparatus to display steering information of a front wheel and steering information of a rear wheel in a process in which the vehicle parks in the target parking space along the first parking path.

With reference to the second aspect, in some implementations of the second aspect, the apparatus further includes: a determining unit, configured to determine a curvature optimization constraint based on at least one of a kinematic model of the vehicle and information about an obstacle around the vehicle; and the control unit is specifically configured to: optimize a curvature of the first parking path based on the curvature optimization constraint, to obtain a second parking path; and control, based on the second parking path, the vehicle to park in the target parking space from the first location.

With reference to the second aspect, in some implementations of the second aspect, the obtaining unit is further configured to: before obtaining the first location and the information about the target parking space, obtain a first instruction of a user, where the first instruction instructs to activate an automatic parking function.

With reference to the second aspect, in some implementations of the second aspect, the automatic parking function includes automatic parking assist APA.

With reference to the second aspect, in some implementations of the second aspect, the planning unit is further configured to: before planning the first parking path, pre-plan a third parking path and a fourth parking path, where the third parking path is a parking path obtained through front-wheel steering planning, and the fourth parking path is a parking path obtained through four-wheel steering planning; and determine that a quantity of gear shifts of the fourth parking path is less than a quantity of gear shifts of the third parking path, and/or determine that a difference between a length of the fourth parking path and a length of the third parking path is greater than or equal to a preset difference.

According to a third aspect, this application provides a parking apparatus. This apparatus includes a processor and a memory. The memory is configured to store instructions, and the processor executes the instructions stored in the memory, so that the apparatus performs any possible method according to the first aspect.

According to a fourth aspect, this application provides a vehicle. The vehicle includes any possible apparatus according to the second aspect or the third aspect.

According to a fifth aspect, this application provides a computer program product. The computer program product includes computer program code. When the computer program code is run on a computer, the computer is enabled to perform any possible method according to the first aspect.

It should be noted that all or some of the computer program code may be stored in a first storage medium. The first storage medium may be packaged together with a processor, or may be packaged separately from a processor. This is not specifically limited in embodiments of this application.

According to a sixth aspect, this application provides a computer-readable storage medium. The computer-readable storage medium stores program code. When the computer program code is run on a computer, the computer is enabled to perform any possible method according to the first aspect.

According to a seventh aspect, this application provides a chip system. The chip system includes a processor configured to invoke a computer program or computer instructions stored in a memory, so that the processor performs any possible method according to the first aspect.

With reference to the seventh aspect, in a possible implementation, the processor is coupled to the memory through an interface.

With reference to the seventh aspect, in a possible implementation, the chip system further includes the memory. The memory stores the computer program or the computer instructions.

According to an eighth aspect, this application provides a chip. The chip system includes a circuit. The circuit is configured to perform any possible method according to the first aspect.

### BRIEF DESCRIPTION OF DRAWINGS

FIG. 1 is a functional block diagram of a vehicle according to an embodiment of this application;
FIG. 2 is a block diagram of an advanced driving assistant system ADAS according to an embodiment of this application;
FIG. 3 is a schematic flowchart of a parking method according to an embodiment of this application;
FIG. 4 is a diagram of an expanded node corresponding to a vehicle with front-wheel steering;
FIG. 5 is a diagram of an expanded node of a vehicle with four-wheel steering according to an embodiment of this application;
FIG. 6 is a diagram of an application scenario according to an embodiment of this application;
FIG. 7 is a diagram of another application scenario according to an embodiment of this application; and
FIG. 8 is a block diagram of a parking apparatus according to an embodiment of this application.

### DESCRIPTION OF EMBODIMENTS

The following describes the technical solutions in embodiments of this application with reference to the accompanying drawings in embodiments of this application. In description in embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation. In addition, in the descriptions of embodiments, unless otherwise specified, "a plurality of" means two or more.

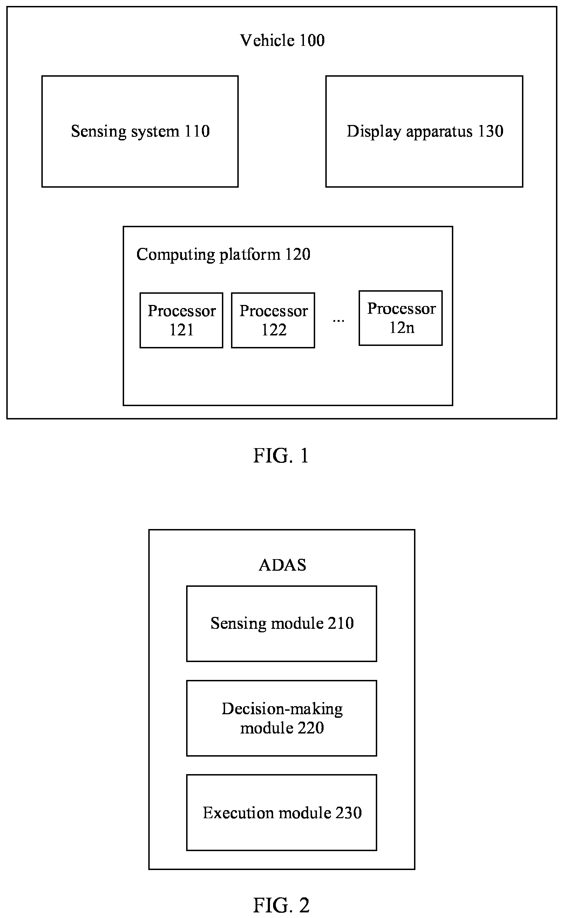

FIG. 1 is a functional block diagram of a vehicle 100 according to an embodiment of this application. The vehicle 100 may include a sensing system 110, a computing platform 120, and a display apparatus 130. The sensing system 110 may include one or more sensors that sense information about an ambient environment of the vehicle 100. For example, the sensing system 110 may include a positioning system. The positioning system may be a global positioning system (global positioning system, GPS), a BeiDou system, or another positioning system. For another example, the sensing system 110 may include one or more of an inertial measurement unit (inertial measurement unit, IMU), an acceleration sensor, a lidar, a millimeter-wave radar, an ultrasonic radar, and an image shooting apparatus. For example, the acceleration sensor may include a sensor configured to detect an acceleration signal of an air-suspension system, or may include a sensor configured to detect an acceleration signal of an ESC.

Some or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

The display apparatus 130 in a cockpit is mainly classified into two types: a first type is a vehicle display, and a second type is a projection display, for example, a head-up display (head-up display, HUD) apparatus. The vehicle display is a physical display, and is an important part of an in-vehicle infotainment system. A plurality of displays may be disposed in the cockpit, for example, a digital instrument display, a central control screen, and a display in front of a passenger (also referred to as a front-row passenger) in a co-driver seat, a display in front of a passenger in a left back row, and a display in front of a passenger in a right back row, and even a vehicle window may also be used as a display for display. A head-up display is also referred to as a head-up display system, which is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system. It should be understood that the HUD may also have another type of system with technology evolution. This is not limited in this application.

The foregoing display apparatus 130 is described by using the vehicle display and the projection display as an example. Embodiments of this application are not limited thereto. For example, the display apparatus 130 may alternatively be a light display or a projection screen.

The vehicle 100 may include an advanced driving assistant system (advanced driving assistant system, ADAS). The ADAS obtains information around the vehicle using a plurality of types of sensors (including but not limited to the lidar, the millimeter-wave radar, the image shooting apparatus, the ultrasonic sensor, the global positioning system, and the inertial measurement unit) in the vehicle, and analyzes and processes the obtained information, to implement functions such as obstacle sensing, target recognition, vehicle positioning, path planning, and driver monitoring/reminder. This improves traveling safety, automation, and comfort of the vehicle.

For example, FIG. 2 is a block diagram of an ADAS according to an embodiment of this application. In terms of a logical function, the ADAS may include three main functional modules: a sensing module 210, a decision-making module 220, and an execution module 230. The sensing module 210 senses an ambient environment of a vehicle body through a sensor, and inputs corresponding real-time data into the decision-making module 220. The decision-making module 220 makes a corresponding decision based on information obtained by the sensing module 210. After receiving a decision signal from the decision-making module 220, the execution module 230 takes a corresponding action, for example, driving, lane change, steering, braking, or warning.

The sensing module 210 may be the sensing system 110, and the decision-making module 220 may be located in the computing platform 120.

At different autonomous driving levels (L0 to L5), the ADAS may implement different levels of autonomous driving assistance based on information obtained by utilizing an artificial intelligence algorithm and a plurality of sensors. The foregoing autonomous driving levels (L0 to L5) are based on a classification standard of the society of automotive engineers (society of automotive engineers, SAE). The level L0 indicates no automation, a level L1 indicates driver assistance, a level L2 indicates partial automation, a level L3 indicates conditional automation, a level L4 indicates high automation, and the level L5 indicates full automation. Tasks of monitoring and responding to road conditions at the L1 to L3 levels are jointly completed by a driver and a system, and the driver needs to take over a dynamic driving task. The L4 and L5 levels may enable the driver to be completely transformed into a passenger. For example, automatic parking may include APA, RPA, AVP, and the like. For the APA, the driver does not need to control a steering wheel, but still needs to control a throttle and a brake in a vehicle. For the RPA, the driver may remotely park the vehicle outside the vehicle by utilizing a terminal (for example, a mobile phone). For the AVP, the vehicle may complete parking without the driver. In terms of the corresponding autonomous driving levels, the APA is approximately at the level L1, the RPA is approximately between the levels L2 to L3, and the AVP is approximately at the level L4.

For example, the computing platform 120 may identify a target parking space and an obstacle around the vehicle by sensing an environment, plan a feasible parking path, and complete parking by controlling the vehicle. A vehicle with a four-wheel steering capability can implement active steering of a front wheel and a rear wheel, and can implement more motion manners compared with a vehicle with two-front-wheel steering. For example, when a steering direction of the rear wheel is opposite to a steering direction of the front wheel, a turning radius may be reduced; and when the steering direction of the rear wheel is the same as the steering direction of the front wheel, oblique motion may be performed. In this embodiment of this application, the vehicle with four-wheel steering is used in a parking scenario, so that more efficient parking can be implemented in the foregoing motion manner.

In conventional four-wheel steering, the front wheel and the rear wheel may be manually specified to be in a same direction, or the front wheel and the rear wheel may be manually specified to be in counter directions. The steering wheel provides only one input, but steering angles of the front wheel and the rear wheel provide two outputs. Therefore, the steering angles of the front wheel and the rear wheel need to be locked in a fixed ratio. Consequently, parking efficiency of the vehicle with four-wheel steering is low, and potentials of all motion modes of four-wheel steering cannot be realized. In this embodiment of this application, a path planning method combining a four-wheel steering motion mode is proposed based on a feature of four-wheel steering. In this embodiment of this application, a mode does not need to be specified or a ratio of a front-wheel steering angle to a rear-wheel steering angle does not need to be fixed, and different steering modes (for example, different combinations of the front-wheel steering angle and the rear-wheel steering angle) can be automatically matched to adapt to different scenarios. In comparison with traditional front-wheel steering, this is applicable to narrower extreme scenarios, and parking efficiency is higher and a quantity of gear shifts is smaller.

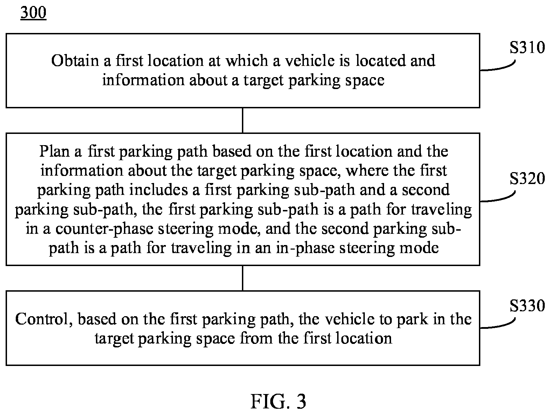

FIG. 3 is a schematic flowchart of a parking method 300 according to an embodiment of this application. The method 300 may be performed by the vehicle 100, or the method 300 may be performed by the computing platform 120, or the method 300 may be performed by a system including the computing platform 120 and the sensing system 110, or the method 300 may be performed by a system-on-a-chip (system-on-a-chip, SoC) on the computing platform 120, or the method 300 may be performed by a processor, a chip, or a circuit on the computing platform 120, or the method 300 may be performed by the decision-making module 220. The method 300 includes the following steps.

S310: Obtain a first location at which a vehicle is located and information about a target parking space.

Optionally, before obtaining the first location at which the vehicle is located and the information about the target parking space, the method further includes: obtaining a first instruction of a user, where the first instruction instructs to activate an automatic parking function.

Optionally, the automatic parking function includes an APA function, an RPA function, or an AVP function.

Optionally, obtaining the first location at which the vehicle is located includes: obtaining the first location at which the vehicle receives the first instruction.

For example, the first instruction may be a voice instruction sent by the user.

For example, the first instruction may be an operation of tapping an automatic parking control on a display by the user.

S320: Plan a first parking path based on the first location and the information about the target parking space, where the first parking path includes a first parking sub-path and a second parking sub-path, the first parking sub-path is a path for traveling in a counter-phase steering mode, the second parking sub-path is a path for traveling in an in-phase steering mode, a direction of a front-wheel steering angle of the vehicle is opposite to a direction of a rear-wheel steering angle of the vehicle in the counter-phase steering mode, and the direction of the front-wheel steering angle of the vehicle is the same as the direction of the rear-wheel steering angle of the vehicle in the in-phase steering mode.

That the direction of the front-wheel steering angle is opposite to the direction of the rear-wheel steering angle may also be understood as that a steering direction of a front wheel is opposite to a steering direction of a rear wheel, and that the direction of the front-wheel steering angle is the same as the direction of the rear-wheel steering angle may also be understood as that the steering direction of the front wheel is the same as the steering direction of the rear wheel.

Optionally, the vehicle may plan the first parking path based on a geometric method.

A parking path planning method includes a geometric method and a search method. The geometric method is a method of joining a spiral line and a straight line from the target parking space to the location at which the vehicle is located. Advantages of the geometric method are simplicity and speed.

In this embodiment of this application, during parking path planning, the vehicle may automatically plan a parking trajectory including a parking sub-trajectory in the in-phase steering mode and a parking sub-trajectory in the counter-phase steering mode based on a current location at which the vehicle is located and the information about the target parking space. In this way, a quantity of gear shifts of the vehicle in a process of parking in the target parking space can be reduced, to enhance parking efficiency of the vehicle, thereby improving parking experience of the user.

Optionally, the first parking path includes a plurality of expanded nodes, the plurality of expanded nodes include a first expanded node, and planning the first parking path based on the first location and the information about the target parking space includes: determining the plurality of to-be-expanded nodes based on information about a wheel steering angle, where the information about the wheel steering angle includes information about a wheel steering angle in the counter-phase steering mode and information about a wheel steering angle in the in-phase steering mode; and determining the first expanded node from the plurality of to-be-expanded nodes based on a cost from the first location to each to-be-expanded node in the plurality of to-be-expanded nodes and a heuristic value from the to-be-expanded node to the target parking space.

The foregoing process of determining the plurality of expanded nodes based on the cost and the heuristic value and determining the parking path based on the plurality of expanded nodes may also be understood as that the vehicle plans the parking path based on the search method.

The search method mainly includes a hybrid A* algorithm. The search algorithm in this embodiment of this application may be an A* algorithm or a hybrid A* algorithm. An advantage of the hybrid A* algorithm is that an entire Euclidean space is explored in a search manner, so that a path that meets an obstacle avoidance requirement and that is from any start pose to the target parking space can be generated. Therefore, four-wheel steering and the hybrid A* algorithm are combined, to obtain more feasible path solutions by realizing greater potentials of four-wheel steering and the hybrid A* algorithm.

The A* algorithm is a classic method in path planning. A principle of the A* algorithm is roughly as follows: In a connection diagram of a parking start point and a parking end point, beginning from the parking start point, a cost from a to-be-expanded node (or adjacent vertex) of the parking start point to the parking start point and a heuristic value from the to-be-expanded node to the parking end point are calculated, and these nodes are added to an open set. A to-be-expanded node with a smallest sum of an expansion cost and a heuristic value is selected as a node that has been expanded and is added to a closed set. Costs and heuristic values of to-be-expanded nodes of the expanded node are calculated, and the nodes are added to the open set. A node with a smallest expansion cost and heuristic value is selected from the open set as a node that has been expanded and is added to the closed set. This process is repeated until the end point is reached. In this case, a feasible parking path from the parking start point to the parking end point can be found through backtracking.

The hybrid A* algorithm combines the A* algorithm with a non-holonomic constraint of the vehicle, introduces a kinematic constraint of the vehicle during node exploration, generates a series of to-be-expanded nodes, and calculates costs and heuristic values of these nodes. A node selection and iteration manner of the hybrid A* algorithm is consistent with that of the A* algorithm. A difference lies in that nodes in the A* algorithm are existing, and expanded nodes in the hybrid A* algorithm are generated through exploration by utilizing the kinematic constraint of the vehicle.

In this embodiment of this application, a unique motion manner of four-wheel steering is introduced when a node is expanded by using the hybrid A* algorithm, a feature of the expanded node in the hybrid A* algorithm is utilized, and a four-wheel steering motion mode is integrated, to obtain the first parking path.

Steering modes that can be implemented by a vehicle with four-wheel steering include the counter-phase steering mode and the in-phase steering mode. In the counter-phase steering mode, the steering direction of the rear wheel is different from the steering direction of the front wheel of the vehicle. In this way, a smaller turning radius can be implemented. In the in-phase steering mode, the steering direction of the rear wheel is the same as the steering direction of the front wheel. In this way, a lateral displacement can be implemented in a process of moving forward. A special scenario in the in-phase steering mode is that when the rear-wheel steering angle is the same as the front-wheel steering angle, oblique movement can be implemented without changing a direction of a vehicle head, and this is also referred to as a crab mode. The two unique motion manners are different from those of a vehicle with front-wheel steering, and may be specially designed.

For example, Table 1 shows the information about the wheel steering angle provided in this embodiment of this application.

**Table 1**

| Steering mode | (Front-wheel steering angle α, rear-wheel steering angle β) |
|---|---|
| Counter-phase steering mode | (40°, -10°), (39°, -10°), ..., (-39°, 10°), (-40°, 10°) |
| | (40°, -9°), (39°, -9°), ..., (-39°, 9°), (-40°, 9°) |
| | |
| In-phase steering mode | (40°, 10°), (39°, 10°), ..., (39°, 10°), (40°, 10°) |
| | (40°, 9°), (39°, 9°), ..., (39°, 9°), (40°, 9°) |
| | ... |
| | (-40°, -10°), (-39°, -10°), ..., (-39°, -10°), (-40°, -10°) |

In the foregoing counter-phase steering mode, that symbols of the front-wheel steering angle and the rear-wheel steering angle in a wheel steering angle combination are different may indicate that the steering direction of the front wheel is different from the steering direction of the rear wheel, and that the symbols of the front-wheel steering angle and the rear-wheel steering angle in the wheel steering angle combination are the same may indicate that the steering direction of the front wheel is the same as the steering direction of the rear wheel.

When the vehicle performs node expansion by using the hybrid A* algorithm, a to-be-expanded node of a current node may be determined based on a combination of the front-wheel steering angle and the rear-wheel steering angle shown in Table 1, to determine an expanded node based on a cost from the current node to each to-be-expanded node and a heuristic value from the to-be-expanded node to the target parking space.

In view of the foregoing four-wheel steering motion mode and an introduced degree of freedom difficulty, a four-wheel steering node expansion mode of the hybrid A* algorithm is designed in this embodiment of this application.

For a hybrid A*-based to-be-expanded node generation method with front-wheel steering, a specific method is as follows: In an orientation of the current node, based on a simplified bicycle front-wheel steering kinematic model of the vehicle, a tangent direction of a trajectory is a radial direction of the rear wheel, and an instantaneous center of rotation is in an axial direction of the rear wheel. Arcs are made by using a same central angle from a small turning radius to a large turning radius, an end point of the arc is a new to-be-expanded node, and a tangent direction of the arc is a new heading. A cluster of to-be-expanded nodes is generated in this manner by using different radii, to generate steering node clusters of a left front direction, a right front direction, a left rear direction, and a right rear direction. Node clusters for straight-ahead movement and straight-backward movement are generated based on different step lengths, and the node clusters and the steering node clusters jointly constitute all to-be-expanded nodes.

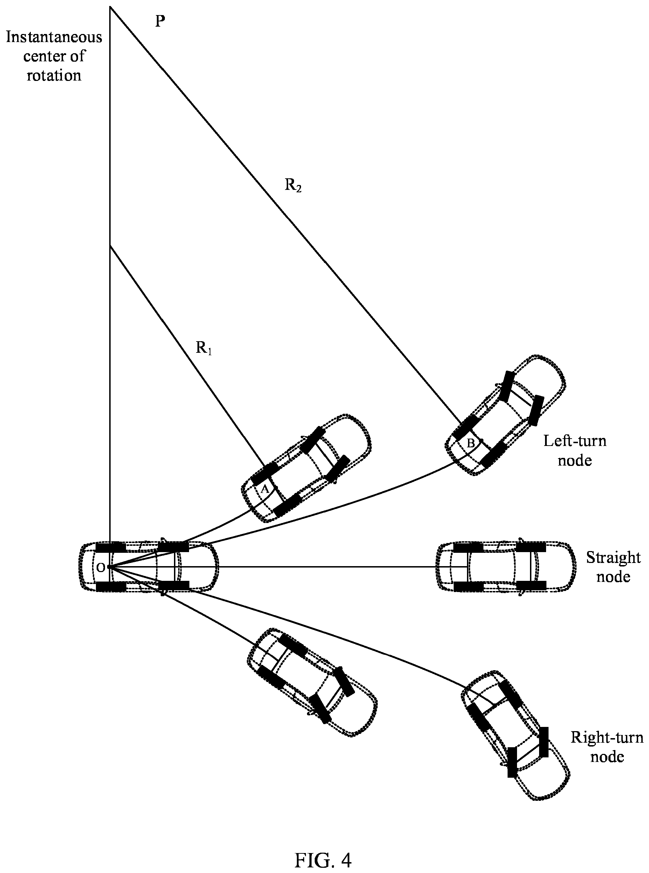

For example, FIG. 4 is a diagram of an expanded node corresponding to a vehicle with front-wheel steering. As shown in FIG. 4, an instantaneous center of rotation of the vehicle with front-wheel steering is a point P, and the point P is located in the axial direction of the rear wheel. Arcs may be made by using turning radii R₁ and R₂ (or corresponding to different front-wheel steering angles), to obtain a point A and a point B. The point A and the point B may be used as adjacent nodes (or expanded nodes) of a point O at which the vehicle is located currently. The node A and the node B shown in FIG. 4 are left-turn nodes. In addition, a straight node and a right-turn node may further be included.

In comparison with an expansion manner of front-wheel steering, in a hybrid A*-based to-be-expanded node generation method with four-wheel steering, because a rear-wheel steering angle is added to a rear-wheel steering bicycle model, nodes in a steering node cluster need to be separately designed. A minimum turning radius corresponds to a maximum front-wheel steering angle and a maximum reverse rear-wheel steering angle (for example, (40°, -10°) shown in Table 1), and a slightly larger turning radius corresponds to a second largest front-wheel steering angle and a second largest reverse rear-wheel steering angle (for example, (39°, -9°) shown in Table 1). The rest may be deduced by analogy to set a specific quantity of combinations. When the front-wheel steering angle and the rear-wheel steering angle are determined (when the front-wheel steering angle and the rear-wheel steering angle are determined, the turning radius of the vehicle is also determined), an intersection point of expanded axial directions of the front wheel and the rear wheel is used as a corresponding instantaneous center of rotation, and then an arc is made by using a fixed central angle. Coordinates of an end point of the arc are coordinates of a to-be-expanded node, and a tangent direction of the end point of the arc is a heading of the vehicle at the to-be-expanded node.

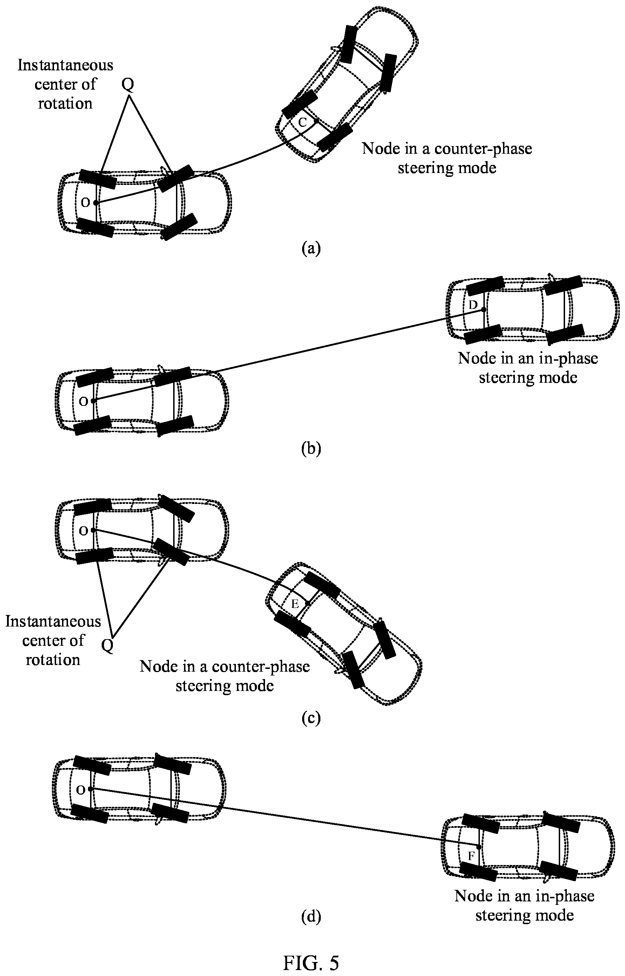

For example, FIG. 5 is a diagram of an expanded node of a vehicle with four-wheel steering according to an embodiment of this application.

As shown in (a) in FIG. 5, the vehicle is in the counter-phase steering mode, and an instantaneous center of rotation may be an intersection point Q of the axial direction of the front axle and the axial direction of the rear axle. When the front-wheel steering angle and the rear-wheel steering angle of the vehicle are determined, the turning radius of the vehicle is also determined. The vehicle may obtain a to-be-expanded node C through expansion. The to-be-expanded node C may also be referred to as a left-turn node in the counter-phase steering mode.

As shown in (b) in FIG. 5, when the vehicle is in the in-phase steering mode, the front-wheel steering angle and the rear-wheel steering angle of the vehicle are in a same direction and have a same angle. In this case, the vehicle may move obliquely, to obtain a to-be-expanded node D through extension. The to-be-expanded node D may also be referred to as a left-turn node in the in-phase steering mode (or a crab left-turn node).

Similarly, as shown in (c) and (d) in FIG. 5, the vehicle with four-wheel steering may further obtain a node E in the counter-phase steering mode and a node F in the in-phase steering mode through extension.

For a special case crab mode in the in-phase steering mode of four-wheel steering, a maximum rear-wheel steering angle (for example, 10°) and a front-wheel steering angle (for example, 10°) that is the same as the rear-wheel steering angle are used to define an included angle relative to a heading of a current node, extension is performed based on a specific step length, an end point is a to-be-expanded node in the crab mode, and an extension direction is a heading of the node. In this manner, crab-expanded nodes of a left front direction, a right front direction, a left rear direction, and a right rear direction are generated.

The foregoing FIG. 4 and FIG. 5 each show forward-expanded nodes. A principle of a backward-expanded node is the same as that of the forward-expanded node, and an extension direction is a reverse direction.

Optionally, the method 300 further includes: obtaining the information about the wheel steering angle based on environment information of the vehicle.

Optionally, obtaining the information about the wheel steering angle based on the environment information of the vehicle includes: obtaining the information about the wheel steering angle based on a width of a lane in which the vehicle is located.

The foregoing lane may be a lane in which the vehicle is located in a parking scenario, for example, a lane in which the vehicle is located when the vehicle parks in a perpendicular parking space, or a lane in which the vehicle is located when the vehicle parks in a horizontal parking space.

For example, the information about the wheel steering angle includes a plurality of combinations of the front-wheel steering angle and the rear-wheel steering angle. When the width of the lane in which the vehicle is located is less than 5.3 meters, the front-wheel steering angle may be selected from [-40°, 40°], and the rear-wheel steering angle may be selected from [-10°, 10°].

For example, when the width of the lane in which the vehicle is located is greater than or equal to 5.3 meters, the front-wheel steering angle may be selected from [-40°, 40°], and the rear-wheel steering angle may be selected from [-5°, 5°].

For example, Table 2 shows information about another wheel steering angle provided in this embodiment of this application.

**Table 2**

| Steering mode | (Front-wheel steering angle α, rear-wheel steering angle β) |
|---|---|
| Counter-phase steering mode | (40°, -5°), (39°, -5°), ..., (-39°, 5°), (-40°, 5°) |
| | (40°, -4°), (39°, -4°), ..., (-39°, 4°), (40°, 4°) |
| | ... |
| In-phase steering mode | (40°, 5°), (39°, 5°), ..., (39°, 5°), (40°, 5°) |
| | (40°, 4°), (39°, 4°), ..., (39°, 4°), (40°, 4°) |
| | ... |
| | (-40°, -5°), (-39°, -5°), ..., (-39°, -5°), (-40°, -5°) |

In this way, when the lane in which the vehicle is located is wide, the rear-wheel steering angle may be selected from a small rear-wheel steering angle range, and the quantity of combinations of the front-wheel steering angle and the rear-wheel steering angle may be reduced. This helps improve a path planning speed without increasing the quantity of gear shifts, thereby improving parking experience of the user.

Optionally, obtaining the information about the wheel steering angle based on the environment information of the vehicle includes: obtaining the information about the wheel steering angle based on a width of the target parking space.

For example, when the target parking space is a non-narrow parking space, the front-wheel steering angle may be selected from [-40°, 40°], and the rear-wheel steering angle may be selected from [-5°, 5°].

For example, when the target parking space is a narrow parking space, the front-wheel steering angle may be selected from [-40°, 40°], and the rear-wheel steering angle may be selected from [-10°, 10°].

Optionally, determining the first expanded node from the plurality of to-be-expanded nodes based on the cost from the first location to each to-be-expanded node in the plurality of to-be-expanded nodes and the heuristic value from the to-be-expanded node to the target parking space includes: determining the first expanded node from the plurality of to-be-expanded nodes based on the cost from the first location to each to-be-expanded node in the plurality of to-be-expanded nodes, a yaw direction of the vehicle at the to-be-expanded node, and the heuristic value from the to-be-expanded node to the target parking space.

Introduction of the rear-wheel steering angle changes the non-holonomic constraint of the vehicle with front-wheel steering, introducing a new degree of freedom, namely, a yaw direction of the vehicle. When the conventional vehicle with front-wheel steering plans a parking path, a tangent direction of an expansion node in the parking path is a heading of the vehicle, and the heading of the vehicle is consistent with the yaw direction of the vehicle. However, for the vehicle with four-wheel steering, the heading of the vehicle is different from the yaw direction of the vehicle. In this way, for the vehicle with four-wheel steering, obstacle avoidance needs to be considered when the parking path is planned, and the yaw direction of the vehicle also needs to be considered. Therefore, compared with the vehicle with front-wheel steering, the vehicle with four-wheel steering has an additional yaw degree of freedom of the vehicle when planning the parking path, increasing a planning difficulty.

Based on the foregoing technical solution, when the parking path is planned, the yaw direction of the vehicle at each expansion node further needs to be considered, to determine whether the vehicle may collide with a surrounding obstacle. This helps improve safety of the vehicle in a parking process.

Optionally, the cost from the first location to each to-be-expanded node includes an obstacle avoidance cost.

For a steering node, a central angle corresponding to an arc drawn during node expansion is an angle of rigid body rotation of a vehicle body. During each node expansion, an increment of a yaw angle is the central angle. For example, the increment is positive during a left turn, and is negative during a right turn. For a straight node and a crab node, the yaw angle of the to-be-expanded node is kept consistent with the yaw angle of the current node. In this way, the yaw angle can be integrated into node expansion, and a yaw angle degree of freedom can be directly introduced into the search algorithm to perform obstacle collision detection.

Compared with the vehicle with front-wheel steering, the vehicle with four-wheel steering has an additional rear-wheel steering angle. Accordingly, a yaw degree of freedom (or a yaw direction of the vehicle, or a pose of the vehicle) of the vehicle is introduced. When the conventional vehicle with front-wheel steering performs parking, a tangent direction of a trajectory of a middle point of the rear axle of the vehicle is a speed direction of the vehicle, namely, the heading of the vehicle. The speed direction of the vehicle is consistent with the yaw direction of the vehicle. Adding of rear-wheel steering makes the speed direction of the vehicle to be different from the yaw direction of the vehicle. In this way, when the vehicle plans the parking trajectory of the vehicle, the yaw direction of the vehicle at each expanded node may be considered while the parking trajectory is obtained through planning, to determine whether the vehicle may collide with an obstacle.

In calculating a cost of a to-be-expanded node, corresponding design may be performed based on a feature of four-wheel steering. A main design objective is that in four-wheel steering, space is expected to be utilized as much as possible to complete parking with a reduced quantity of gear shifts and a shorter trajectory. Therefore, cost design may be performed based on obstacle avoidance and gear shifting, to obtain a trajectory that can adapt to a current scenario. Different adaptive steering modes are implemented through cost design.

For example, for a scenario (for example, turning around) in which a large change of a vehicle yaw angle is required, a quantity of gear shifts and a trajectory length are penalized, so that a cost computed for a trajectory with a smaller turning radius is lower. In this way, a counter-phase steering node can be selected in searching, and this is a principle of automatic enabling of counter-phase steering.

For example, in a scenario in which space on two sides of a vehicle head is insufficient but the vehicle needs to have a lateral displacement, if the vehicle finds that the vehicle is close to an outer-side vehicle when reversing into a parking space in a perpendicular parking space, the conventional vehicle with front-wheel steering can only forward maneuver during parking and then enter the parking space. However, by penalizing this behavior utilizing a gear shift cost, a crab node may be selected preferentially. A crab path obtained through searching allows the vehicle to continue reversing while being away from an adjacent vehicle.

For example, another main application scenario of the crab mode is a parallel parking space with short clearance at the front and rear. The vehicle with front-wheel steering needs to repeatedly reverse the direction and maneuver during parking a plurality of times to park in the space. Based on cost design, the crab mode is preferentially selected to perform path planning, so that the parking space can be entered by performing oblique horizontal movement, reducing a great direction reversing.

Considering a response speed of a vehicle actuator, another objective is to avoid frequent switching between the counter-phase steering mode and the in-phase steering mode and frequent direction reversing as much as possible. Therefore, a penalty for a change amount of front and rear-wheel steering angles may be introduced into cost design. Because a front-wheel steering angle range is larger, the front-wheel steering angle can be fully used. A design advantage of this embodiment of this application is that different steering modes can be automatically enabled in a single segment trajectory based on a scenario. Therefore, a penalty for mode switching may be small, and only excessively frequent switching needs to be suppressed.

Optionally, the cost from the first location to each to-be-expanded node includes a front-wheel steering cost, a rear-wheel steering cost, a mode switching cost, and a gear shifting cost; and determining the first expanded node from the plurality of to-be-expanded nodes based on the cost from the first location to each to-be-expanded node in the plurality of to-be-expanded nodes and the heuristic value from the to-be-expanded node to the target parking space includes: determining the first expanded node from the plurality of to-be-expanded nodes based on the front-wheel steering cost, the rear-wheel steering cost, the mode switching cost, the gear shifting cost, a first weight, a second weight, a third weight, a fourth weight, and the heuristic value from the to-be-expanded node to the target parking space, where the first weight is a weight corresponding to the front-wheel steering cost, the second weight is a weight corresponding to the rear-wheel steering cost, the third weight is a weight corresponding to the mode switching cost, the fourth weight is a weight corresponding to the gear shifting cost, the first weight is less than the second weight, the second weight is less than the third weight, and the third weight is less than the fourth weight.

For example, the cost *Cost* from the first location to each to-be-expanded node may be shown in Formula (1): $Cost = {w}_{1} ∗ {cost}_{1} + {w}_{2} ∗ {cost}_{2}$ (1)

Herein, *cost*₁ is the gear shifting cost, *cost*₂ is the mode switching cost, and *w*₁, *w*₂ are corresponding weights.

Optionally, *w*₁ is greater than *w*₂. For example, *w*₁ is 0.7, and *w*₂ is 0.3.

When node extension is performed by using the search algorithm, a mode switching cost and a gear shifting cost between a current node (for example, the first location) and a to-be-expanded node may be considered, and a corresponding weight is designed for each cost. In these costs, a weight of the gear shifting cost may be set to be the highest. In this way, it can be first ensured that a quantity of gear shifts corresponding to the first parking path obtained through planning is as small as possible. In addition, the mode switching cost is considered, to avoid frequent switching between different steering modes. This helps reduce control complexity of the vehicle, and makes a curvature of a parking path output by the vehicle smoother.

Optionally, the method 300 further includes: determining *w*₁ and *w*₂ based on a scenario in which the vehicle is located.

For example, when the width of the lane in which the vehicle is located is greater than or equal to a preset width, *w*₁ may be determined as 0.7, and *w*₂ may be determined as 0.3. In this way, when the width of the lane in which the vehicle is located is wide, the weight corresponding to the gear shifting cost may be increased, so that the quantity of gear shifts in a process in which the vehicle parks in the target parking space is as small as possible.

For example, when the vehicle is stuck due to an obstacle during parking through front-wheel steering, the vehicle may perform parking through four-wheel steering. In this case, *w*₁ may be determined as 0.8, and *w*₂ may be determined as 0.2. In this way, when the vehicle is stuck, the weight corresponding to the mode switching cost may be decreased. In this way, a limitation on switching between the in-phase steering mode and the counter-phase steering mode is reduced, so that the vehicle parks in the target parking space through switching between the in-phase steering mode and the counter-phase steering mode.

In this embodiment of this application, *w*₁ and *w*₂ may be dynamically adjusted based on different scenarios in which the vehicle is located, so that the gear shifting cost and the mode switching cost better meet a requirement in a current scenario.

Optionally, the cost from the first location to each to-be-expanded node may further consider the front-wheel steering cost and the rear-wheel steering cost.

For example, *Cost* may be shown in Formula (2): $Cost = {w}_{1} ∗ {cost}_{1} + {w}_{2} ∗ {cost}_{2} + {w}_{3} ∗ {cost}_{3} + {w}_{4} ∗ {cost}_{4}$ (2)

Herein, *cost*₃ is the rear-wheel steering cost, *cost*₄ is the front-wheel steering cost, and *w*₃ , *w*₄ are corresponding weights.

Optionally, *w*₁ is greater than *w*₂, *w*₂ is greater than *w*₃, *w*₃ is greater than *w*₄. For example, *w*₁ is 0.4, *w*₂ is 0.3, *w*₃ is 0.2, and *w*₄ is 0.1.

Optionally, the first parking sub-path and the second parking sub-path are parking paths of the vehicle in a first gear.

Optionally, the first gear may be a reverse gear. Controlling, based on the first parking path, the vehicle to park in the target parking space from the first location includes: controlling, in a process in which the vehicle parks in the target parking space along the first parking sub-path, the vehicle to switch from the first parking sub-path to the second parking sub-path when a distance between the vehicle and an obstacle in a parking space adjacent to the target parking space is less than or equal to a preset distance.

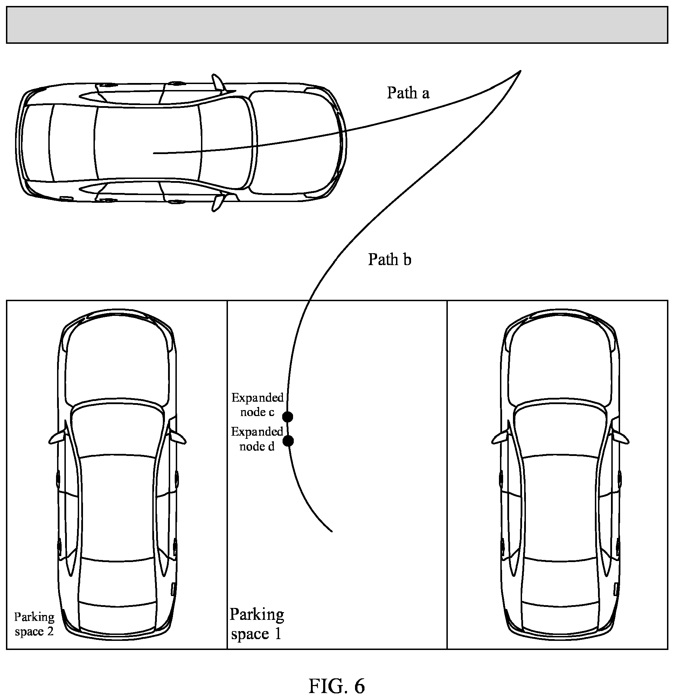

For example, FIG. 6 is a diagram of an application scenario according to an embodiment of this application.

In a process in which the vehicle parks in the target parking space from the location 1, the vehicle may park in a parking space 1 based on the parking path 1 obtained through planning. The parking path 1 includes a path a of the vehicle in a forward gear and a path b of the vehicle in the reverse gear. When the vehicle travels to an expanded node c in the counter-phase steering mode, if it is determined that a distance between the vehicle and a vehicle in an adjacent parking space 2 is less than or equal to the preset distance, when a next expanded node of the expanded node c is determined, an expanded node d may be determined from a plurality of to-be-expanded nodes according to Formula (1). The expanded node d is a node corresponding to the in-phase steering mode. In this way, the vehicle can park in the middle of the parking space 1 without frequently adjusting gears. Instead, the vehicle can park in the middle of the target parking space by switching from the counter-phase steering mode to the in-phase steering mode in the reverse gear. This helps reduce the quantity of gear shifts in the parking process, thereby improving parking experience of the user.

Embodiments of this application are intended to resolve a path planning problem of parking, by the vehicle with four-wheel steering, in various parking spaces in any initial pose, and integrate a kinematic relationship of the vehicle with four-wheel steering into a node expansion mode of a trajectory search algorithm. In addition, a cost is designed based on a feature of four-wheel steering, so that the counter-phase steering mode and the in-phase steering mode can be automatically enabled, and a parking path including a yaw angle (or a pose of the vehicle) is obtained through path optimization that meets a constraint of the vehicle with four-wheel steering.

In embodiments of this application, a motion mode of the vehicle with four-wheel steering is integrated into node expansion of the search algorithm, to maximize utilizing of a capability of the search algorithm for global path searching in a complex obstacle scenario and diverse motion modes of four-wheel steering. Embodiments of this application are applicable to various parking spaces, and the initial pose of the vehicle is not limited. In addition, the user does not need to manually formulate a mode, and adaptive matching between the counter-phase steering mode and the in-phase steering mode can be automatically implemented.

S330: Control, based on the first parking path, the vehicle to park in the target parking space from the first location.

Optionally, the method 300 further includes: controlling a display apparatus to display steering information of the front wheel and steering information of the rear wheel in a process in which the vehicle parks in the target parking space along the first parking path.

Optionally, the method 300 further includes: determining a curvature optimization constraint based on at least one of a kinematic model of the vehicle and information about an obstacle around the vehicle; and controlling, based on the first parking path, the vehicle to park in the target parking space from the first location includes: optimizing a curvature of the first parking path based on the curvature optimization constraint, to obtain a second parking path; and controlling, based on the second parking path, the vehicle to park in the target parking space from the first location.

A trajectory obtained, by using the search algorithm, by the vehicle with front-wheel steering is not smooth enough, a curvature is discontinuous, and vehicle control and tracking are difficult. A kinematic model of the vehicle with four-wheel steering and a boundary of the obstacle around the vehicle are introduced, to constrain an optimization range of the curvature of the vehicle, so that post-processing optimization is performed on parking obtained through searching based on the curvature optimization constraint, to implement a smoother curvature change.

In an embodiment, a model prediction control algorithm may also be used to control the vehicle. In comparison with conventional front-wheel steering, an additional yaw angle variable of the vehicle is provided. Information about the four-wheel steering parking path provided by the foregoing motion planning includes a yaw angle of the vehicle corresponding to a trajectory point. The yaw angle is introduced into model prediction control for tracking, to implement automatic parking of the vehicle with four-wheel steering.

Optionally, before planning the first parking path based on the first location and the information about the target parking space, the method further includes: pre-planning a third parking path and a fourth parking path, where the third parking path is a parking path obtained through front-wheel steering planning, and the fourth parking path is a parking path obtained through four-wheel steering planning; and determining that a quantity of gear shifts of the fourth parking path is less than a quantity of gear shifts of the third parking path, and/or determining that a difference between a length of the fourth parking path and a length of the third parking path is greater than or equal to a preset difference.

Optionally, when it is determined that the quantity of gear shifts of the fourth parking path is equal to the quantity of gear shifts of the third parking path, and/or it is determined that the difference between the length of the fourth parking path and the length of the third parking path is less than the preset difference, the vehicle may determine to use front-wheel steering parking to plan a parking trajectory.

Optionally, pre-planning the third parking path and the fourth parking path includes: obtaining the third parking path and the fourth parking path through pre-planning based on the geometric method.

Embodiments of this application may be applied to a scenario in which the vehicle parks in a horizontal parking space, a vertical parking space, or an angled parking space, and is also applicable to a scenario in which the vehicle pulls out of a horizontal parking space, a vertical parking space, or an angled parking space.

Optionally, the horizontal parking space, the vertical parking space, and the angled parking space may be narrow parking spaces.

Optionally, before planning the first parking path, the method further includes: obtaining a second location of the vehicle; planning a fifth parking path based on the second location and the information about the target parking space, where the fifth parking path includes the first location; and when the vehicle travels to the first location along the fifth parking path, determining that the vehicle needs to re-plan a parking path.

Optionally, determining that the vehicle needs to re-plan the parking path includes: when it is detected that a collision risk between the vehicle and an obstacle is greater than or equal to a preset collision risk, determining that the vehicle needs to re-plan a parking path.

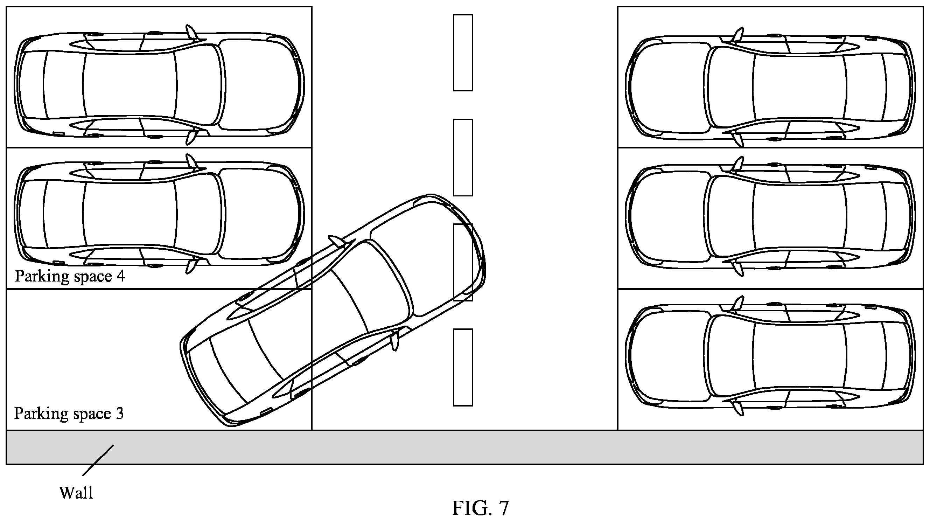

For example, FIG. 7 is a diagram of another application scenario according to an embodiment of this application. In a process in which the vehicle parks in a parking space 3 through front-wheel steering, the vehicle is stuck due to an excessively close distance between the vehicle and another vehicle in an adjacent parking space 4. In this case, when re-planning a parking path, the vehicle may park in the parking space 3 through four-wheel steering.

Based on the foregoing technical solutions, research and development personnel in embodiments of this application test quantities of gear shifts of the vehicle in scenarios of the vertical parking space and a horizontal dead-end parking space.

For example, Table 3 shows a comparison of quantities of gear shifts of the vehicle with front-wheel steering and the vehicle with four-wheel steering in a process of parking in the target parking space from a same start location in different channel widths.

**Table 3**

| Scenario | Channel width | Quantity of gear shifts of the vehicle with front-wheel steering | Quantity of gear shifts of the vehicle with four-wheel steering |
|---|---|---|---|
| Vertical parking space (parking space width: 3 m) | 4.7 m | 5 | 3 |
| | 5.0 m | 5 | 1 |
| | 5.3 m | 3 | 1 |
| | 5.5 m | 3 | 1 |
| | 5.8 m | 3 | 1 |
| | 6.0 m | 3 | 1 |
| Vertical dead-end parking space | 6.0 m | 5 | 1 |
| Horizontal dead-end parking space | | 7 | 3 |

It can be learned from the foregoing test results that, with reference to parking directions in this embodiment of this application, a quantity of gear shifts of parking, by the vehicle, in the target parking space in different scenarios can be significantly reduced.

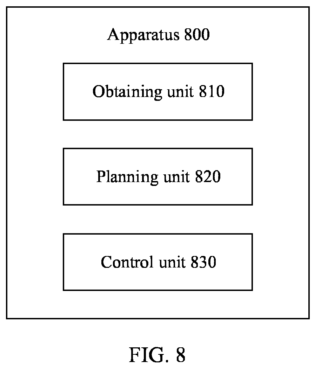

FIG. 8 is a block diagram of a parking apparatus 800 according to an embodiment of this application. The apparatus 800 includes: an obtaining unit 810, configured to obtain a first location at which a vehicle is located and information about a target parking space; a planning unit 820, configured to plan a first parking path based on the first location and the information about the target parking space, where the first parking path includes a first parking sub-path and a second parking sub-path, the first parking sub-path is a path for traveling in a counter-phase steering mode, the second parking sub-path is a path for traveling in an in-phase steering mode, a direction of a front-wheel steering angle of the vehicle is opposite to a direction of a rear-wheel steering angle of the vehicle in the counter-phase steering mode, and the direction of the front-wheel steering angle of the vehicle is the same as the direction of the rear-wheel steering angle of the vehicle in the in-phase steering mode; and a control unit 830, configured to control, based on the first parking path, the vehicle to park in the target parking space from the first location.

Optionally, the first parking sub-path and the second parking sub-path are parking paths of the vehicle in a first gear.

Optionally, the first parking path includes a plurality of expanded nodes, the plurality of expanded nodes include a first expanded node, and the planning unit 820 is specifically configured to: determine the plurality of to-be-expanded nodes based on information about a wheel steering angle, where the information about the wheel steering angle includes information about a wheel steering angle in the counter-phase steering mode and information about a wheel steering angle in the in-phase steering mode; and determine the first expanded node from the plurality of to-be-expanded nodes based on a cost from the first location to each to-be-expanded node in the plurality of to-be-expanded nodes and a heuristic value from the to-be-expanded node to the target parking space.

Optionally, the planning unit 820 is specifically configured to: determine the first expanded node from the plurality of to-be-expanded nodes based on the cost from the first location to each to-be-expanded node in the plurality of to-be-expanded nodes, a yaw direction of the vehicle at the to-be-expanded node, and the heuristic value from the to-be-expanded node to the target parking space.

Optionally, the cost from the first location to each to-be-expanded node includes a front-wheel steering cost, a rear-wheel steering cost, a mode switching cost, and a gear shifting cost; and the planning unit 820 is specifically configured to: determine the first expanded node from the plurality of to-be-expanded nodes based on the front-wheel steering cost, the rear-wheel steering cost, the mode switching cost, the gear shifting cost, a first weight, a second weight, a third weight, a fourth weight, and the heuristic value from the to-be-expanded node to the target parking space, where the first weight is a weight corresponding to the front-wheel steering cost, the second weight is a weight corresponding to the rear-wheel steering cost, the third weight is a weight corresponding to the mode switching cost, the fourth weight is a weight corresponding to the gear shifting cost, the first weight is less than the second weight, the second weight is less than the third weight, and the third weight is less than the fourth weight.

Optionally, the control unit 830 is further configured to control a display apparatus to display steering information of a front wheel and steering information of a rear wheel in a process in which the vehicle parks in the target parking space along the first parking path.

Optionally, the apparatus 800 further includes a determining unit, configured to determine a curvature optimization constraint based on at least one of a kinematic model of the vehicle and information about an obstacle around the vehicle; and the control unit 830 is specifically configured to: optimize a curvature of the first parking path based on the curvature optimization constraint, to obtain a second parking path; and control, based on the second parking path, the vehicle to park in the target parking space from the first location.

Optionally, the obtaining unit 810 is further configured to: before obtaining the first location and the information about the target parking space, obtain a first instruction of a user, where the first instruction instructs to activate an automatic parking function.

Optionally, the automatic parking function includes automatic parking assist APA.

Optionally, the planning unit 820 is further configured to: before planning the first parking path, pre-plan a third parking path and a fourth parking path, where the third parking path is a parking path obtained through front-wheel steering planning, and the fourth parking path is a parking path obtained through four-wheel steering planning; and determine that a quantity of gear shifts of the fourth parking path is less than a quantity of gear shifts of the third parking path, and/or determine that a difference between a length of the fourth parking path and a length of the third parking path is greater than or equal to a preset difference.

It should be understood that division of the units in the foregoing apparatus is merely logical function division. In practice, all or some of the units may be integrated into one physical entity, or may be physically separated. In addition, the units in the apparatus may be implemented in a form of software invoked by the processor. For example, the apparatus includes a processor, the processor is connected to a memory, the memory stores instructions, and the processor invokes the instructions stored in the memory, to implement any one of the foregoing methods or implement the functions of the units of the apparatus. The processor is, for example, a general purpose processor, like a CPU or a microprocessor. The memory is a memory inside the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between components in the circuit. For another example, in another implementation, the hardware circuit may be implemented by using a PLD. An FPGA is used as an example, the FPGA may include a large quantity of logic gate circuits, and a connection relationship between the logic gate circuits is configured by using a configuration file, to implement the functions of some or all of the units. All the units of the apparatus may be implemented in a form of software called by the processor, or may be implemented in a form of hardware circuit, or some of the units are implemented in a form of software called by the processor, and remaining units are implemented in a form of hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by using an ASIC or a PLD, for example, an FPGA. In a reconfigurable hardware circuit, a process in which the processor loads a configuration document to implement hardware circuit configuration may be understood as a process in which the processor loads instructions to implement functions of some or all of the units. In addition, the circuit may be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated and implemented in a form of SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the method or the steps performed in the foregoing embodiments.

Optionally, if the apparatus is located in the vehicle, the processing unit may be the processors 121 to 12n shown in FIG. 1.

An embodiment of this application further provides a parking system. The control system may include a computing platform and a sensing system. The computing platform may include the parking apparatus 800.

An embodiment of this application further provides a vehicle. The vehicle may include the parking apparatus 800 or the parking system.

An embodiment of this application further provides a computer program product. The computer program product includes computer program code. When the computer program code is run on a computer, the computer is enabled to perform the methods in the foregoing embodiments.

An embodiment of this application further provides a computer-readable medium. The computer-readable medium stores program code, and when the computer program code is run on a computer, the computer is enabled to perform the methods in the foregoing embodiments.

An embodiment of this application further provides a chip. The chip includes a circuit, and the circuit is configured to perform the methods in the foregoing embodiments.

In an implementation process, the steps in the foregoing methods may be implemented by using an integrated logical circuit of hardware in the processor, or by using instructions in a form of software. The method disclosed with reference to embodiments of this application may be directly performed by a hardware processor, or may be performed by a combination of a software module and hardware in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected as required to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A parking method, comprising:
obtaining a first location of a vehicle and information about a target parking space;
planning a first parking path based on the first location and the information about the target parking space, wherein the first parking path comprises a first parking sub-path and a second parking sub-path, the first parking sub-path is a path for traveling in a counter-phase steering mode, the second parking sub-path is a path for traveling in an in-phase steering mode, a direction of a front-wheel steering angle of the vehicle is opposite to a direction of a rear-wheel steering angle of the vehicle in the counter-phase steering mode, and the direction of the front-wheel steering angle of the vehicle is the same as the direction of the rear-wheel steering angle of the vehicle in the in-phase steering mode; and
controlling, based on the first parking path, the vehicle to park in the target parking space from the first location.

2. The method according to claim 1, wherein the first parking sub-path and the second parking sub-path are parking paths of the vehicle in a first gear.

3. The method according to claim 1 or 2, wherein the first parking path comprises a plurality of expanded nodes, the plurality of expanded nodes comprise a first expanded node, and planning the first parking path based on the first location and the information about the target parking space comprises:
determining a plurality of to-be-expanded nodes based on information about a wheel steering angle, wherein the information about the wheel steering angle comprises information about a wheel steering angle in the counter-phase steering mode and information about a wheel steering angle in the in-phase steering mode; and
determining the first expanded node from the plurality of to-be-expanded nodes based on a cost from the first location to each to-be-expanded node in the plurality of to-be-expanded nodes and a heuristic value from the to-be-expanded node to the target parking space.

4. The method according to claim 3, wherein determining the first expanded node from the plurality of to-be-expanded nodes based on the cost from the first location to each to-be-expanded node in the plurality of to-be-expanded nodes and the heuristic value from the to-be-expanded node to the target parking space comprises:
determining the first expanded node from the plurality of to-be-expanded nodes based on the cost from the first location to each to-be-expanded node in the plurality of to-be-expanded nodes, a yaw direction of the vehicle at the to-be-expanded node, and the heuristic value from the to-be-expanded node to the target parking space.

5. The method according to claim 3 or 4, wherein the cost from the first location to each to-be-expanded node comprises a front-wheel steering cost, a rear-wheel steering cost, a mode switching cost, and a gear shifting cost; and determining the first expanded node from the plurality of to-be-expanded nodes based on the cost from the first location to each to-be-expanded node in the plurality of to-be-expanded nodes and the heuristic value from the to-be-expanded node to the target parking space comprises:
determining the first expanded node from the plurality of to-be-expanded nodes based on the front-wheel steering cost, the rear-wheel steering cost, the mode switching cost, the gear shifting cost, a first weight, a second weight, a third weight, a fourth weight, and the heuristic value from the to-be-expanded node to the target parking space, wherein
the first weight is a weight corresponding to the front-wheel steering cost, the second weight is a weight corresponding to the rear-wheel steering cost, the third weight is a weight corresponding to the mode switching cost, the fourth weight is a weight corresponding to the gear switching cost, the first weight is less than the second weight, the second weight is less than the third weight, and the third weight is less than the fourth weight.

6. The method according to any one of claims 1 to 5, wherein the method further comprises:
controlling a display apparatus to display steering information of a front wheel and steering information of a rear wheel in a process in which the vehicle parks in the target parking space along the first parking path.

7. The method according to any one of claims 1 to 6, wherein the method further comprises:
determining a curvature optimization constraint based on at least one of a kinematic model of the vehicle and information about an obstacle around the vehicle; and
controlling, based on the first parking path, the vehicle to park in the target parking space from the first location comprises:
optimizing a curvature of the first parking path based on the curvature optimization constraint, to obtain a second parking path; and
controlling, based on the second parking path, the vehicle to park in the target parking space from the first location.

8. The method according to any one of claims 1 to 7, wherein before obtaining the first location at which the vehicle is located and the information about the target parking space, the method further comprises:
obtaining a first instruction of a user, wherein the first instruction instructs to activate an automatic parking function.

9. The method according to claim 8, wherein the automatic parking function comprises automatic parking assist APA.

10. The method according to any one of claims 1 to 9, wherein before planning the first parking path based on the first location and the information about the target parking space, the method further comprises:
pre-planning a third parking path and a fourth parking path, wherein the third parking path is a parking path obtained by the vehicle through front-wheel steering planning, and the fourth parking path is a parking path obtained by the vehicle through four-wheel steering planning; and
determining that a quantity of gear shifts of the fourth parking path is less than a quantity of gear shifts of the third parking path, and/or determining that a difference between a length of the fourth parking path and a length of the third parking path is greater than or equal to a preset difference.

11. A parking apparatus, comprising:
an obtaining unit, configured to obtain a first location of a vehicle and information about a target parking space;
a planning unit, configured to plan a first parking path based on the first location and the information about the target parking space, wherein the first parking path comprises a first parking sub-path and a second parking sub-path, the first parking sub-path is a path for traveling in a counter-phase steering mode, the second parking sub-path is a path for traveling in an in-phase steering mode, a direction of a front-wheel steering angle of the vehicle is opposite to a direction of a rear-wheel steering angle of the vehicle in the counter-phase steering mode, and the direction of the front-wheel steering angle of the vehicle is the same as the direction of the rear-wheel steering angle of the vehicle in the in-phase steering mode; and
a control unit, configured to control, based on the first parking path, the vehicle to park in the target parking space from the first location.

12. The apparatus according to claim 11, wherein the first parking sub-path and the second parking sub-path are parking paths of the vehicle in a first gear.

13. The apparatus according to claim 11 or 12, wherein the first parking path comprises a plurality of expanded nodes, the plurality of expanded nodes comprise a first expanded node, and the planning unit is specifically configured to:
determine a plurality of to-be-expanded nodes based on information about a wheel steering angle, wherein the information about the wheel steering angle comprises information about a wheel steering angle in the counter-phase steering mode and information about a wheel steering angle in the in-phase steering mode; and
determine the first expanded node from the plurality of to-be-expanded nodes based on a cost from the first location to each to-be-expanded node in the plurality of to-be-expanded nodes and a heuristic value from the to-be-expanded node to the target parking space.

14. The apparatus according to claim 13, wherein the planning unit is specifically configured to:
determine the first expanded node from the plurality of to-be-expanded nodes based on the cost from the first location to each to-be-expanded node in the plurality of to-be-expanded nodes, a yaw direction of the vehicle at the to-be-expanded node, and the heuristic value from the to-be-expanded node to the target parking space.

15. The apparatus according to claim 13 or 14, wherein the cost from the first location to each to-be-expanded node comprises a front-wheel steering cost, a rear-wheel steering cost, a mode switching cost, and a gear shifting cost, and the planning unit is specifically configured to:
determine the first expanded node from the plurality of to-be-expanded nodes based on the front-wheel steering cost, the rear-wheel steering cost, the mode switching cost, the gear shifting cost, a first weight, a second weight, a third weight, a fourth weight, and the heuristic value from the to-be-expanded node to the target parking space, wherein
the first weight is a weight corresponding to the front-wheel steering cost, the second weight is a weight corresponding to the rear-wheel steering cost, the third weight is a weight corresponding to the mode switching cost, the fourth weight is a weight corresponding to the gear switching cost, the first weight is less than the second weight, the second weight is less than the third weight, and the third weight is less than the fourth weight.

16. The apparatus according to any one of claims 11 to 15, wherein
the control unit is further configured to control a display apparatus to display steering information of a front wheel and steering information of a rear wheel in a process in which the vehicle parks in the target parking space along the first parking path.

17. The apparatus according to any one of claims 11 to 16, wherein the apparatus further comprises:
a determining unit, configured to determine a curvature optimization constraint based on at least one of a kinematic model of the vehicle and information about an obstacle around the vehicle; and
the control unit is specifically configured to:
optimize a curvature of the first parking path based on the curvature optimization constraint, to obtain a second parking path; and
control, based on the second parking path, the vehicle to park in the target parking space from the first location.

18. The apparatus according to any one of claims 11 to 17, wherein
the obtaining unit is further configured to: before obtaining the first location and the information about the target parking space, obtain a first instruction of a user, wherein the first instruction instructs to activate an automatic parking function.

19. The apparatus according to claim 18, wherein the automatic parking function comprises automatic parking assist APA.

20. The apparatus according to any one of claims 11 to 19, wherein
the planning unit is further configured to: before planning the first parking path, pre-plan a third parking path and a fourth parking path, wherein the third parking path is a parking path obtained by the vehicle through front-wheel steering planning, and the fourth parking path is a parking path obtained by the vehicle through four-wheel steering planning; and
determine that a quantity of gear shifts of the fourth parking path is less than a quantity of gear shifts of the third parking path, and/or determine that a difference between a length of the fourth parking path and a length of the third parking path is greater than or equal to a preset difference.

21. A parking apparatus, comprising:
a memory, configured to store a computer program; and
a processor, configured to execute the computer program stored in the memory, so that the apparatus performs the method according to any one of claims 1 to 10.

22. A vehicle, comprising the apparatus according to any one of claims 11 to 21.

23. A computer-readable storage medium, wherein the computer-readable storage medium stores instructions, and when the instructions are executed by a processor, the processor is enabled to implement the method according to any one of claims 1 to 10.

24. A computer program product, wherein the computer program product comprises computer program code, and when the computer program code is run on a computer, the computer is enabled to implement the method according to any one of claims 1 to 10.

25. A chip, wherein the chip comprises a circuit, and the circuit is configured to perform the method according to any one of claims 1 to 10.
